Europäisches Patentamt

European Patent Office

Office européen des brevets

(11) Publication number: **0 205 683**
**B1**

## EUROPEAN PATENT SPECIFICATION

(45) Date of publication of patent specification: **04.04.90**   (51) Int. Cl.⁵: **A 41 H 3/00**

(21) Application number: **85304084.8**

(22) Date of filing: **10.06.85**

(54) Method for designing apparel.

(43) Date of publication of application:
**30.12.86 Bulletin 86/52**

(45) Publication of the grant of the patent:
**04.04.90 Bulletin 90/14**

(84) Designated Contracting States:
**FR GB IT SE**

(56) References cited:
**EP-A-0 137 612**
**FR-A-2 535 086**
**US-A-4 546 434**

(73) Proprietor: **Gioello, Debbie**
**237 Van Cortlandt Park Avenue**
**Yonkers New York 10705 (US)**

(72) Inventor: **Gioello, Debbie**
**237 Van Cortlandt Park Avenue**
**Yonkers New York 10705 (US)**

(74) Representative: **Spence, Anne et al**
**Spence & Townsend Mill House Wandle Road**
**Beddington Croydon Surrey CR0 4SD (GB)**

Courier Press, Leamington Spa, England.

# Description

This invention relates generally to the field of garment design, and more particularly, to an improved method for obtaining one or plural designs using a number of drawing steps and associated research.

Particularly in the field of women's apparel, it is common for an apparel designer to design as many as thirty or more garments, during the course of a single day, from which an executive designer, stylist, marketing representative, manager or buyer will select possibly two or three designs. Such selections are necessarily based upon subjective considerations, and, accordingly, within reasonable limits, the greater number of designs from which to select, the greater is the likelihood of obtaining a satisfactory design or designs.

It is known in the art to provide work books in which pages are devoted to individual components of garments, such as collars, sleeves, skirts, bodices, and the like. The designer uses such books by starting with a sheet of tracing paper upon which a fashion figure has been printed. Next, a series of garment components are selected, and with each selection, the tracing paper is oriented by placing it upon the sketch of the desired component, and lining up the head and shoulders of the figure, such that the desired printed sketch can be traced in proper relative position. This procedure is continued until all of the required garment components have been selected and traced upon the figure.

After examination of the completed drawing, component changes may be made by tracing all of the components except those where change is desired, or by erasing a component from an existing drawing, following which a new tracing of the desired component or part, using a different sketch from the work book, is made.

Using such techniques, an adequate representation of a drawing can be completed within a ten to fifteen minute period. However, repeating the process with successive designs is tedious, and, very often, the successive designs composed as a repeated process are very similar. In such process, a number of complete designs are discarded by the designer herself, with a corresponding waste or loss of design time. Often the substitution of a single element constitutes the entire difference between successive designs, and each entire design must nevertheless be fully completed to provide a basis for visual comparison. This is especially necessary where the final decision is not made by a designer, but by a person who often lacks the capability for high structural visualization.

It is known in the art to provide a computer based system in which representations of entire garment styles are stored and presented to a customer for sales purposes, with an opportunity for the customer or wearer to modify the design within predetermined limits with regard to their measurements. However, such system does not contemplate the actual design of a garment, but merely certain modifications to patterns used in manufacturing.

In using such a system, an existing style or pattern is initially selected by the customer from a catalogue, and a catalogue or identification number is inserted into the system to retrieve the finished pattern from a data bank. Such system is disclosed in U.S. Patent No. 4,149,246 granted to Robert N. Goldman, April 10, 1979. Such system, however, does not permit actual design of a garment, but merely the modification of a previously created pattern. It is specifically used to custom tailor a pattern to the measurements of a client.

While French Patent 2535086 does provide means for designing an apparel on screen it does not have any means for printing out a representation of the completed design.

The present invention provides a method for computer aided design of apparel, comprising the steps of:

providing computer means including visual display means, data input means and printout means for generating a permanent record of computer output;

designing at least one fashion figure on which said apparel design may be selectively and compositely superimposed;

designing a plurality of garment components;

providing a plurality of planar patterns, each of said patterns corresponding to one of each of said garment components;

converting each of said fashion figures, said garment components and said patterns into a form which may be stored, manipulated and output by said computer means;

creating a data base accessible by said computer means containing said converted fashion figures, converted garment components, and converted patterns, said data base linking said converted patterns to said corresponding converted garment components, said data base further linking similar converted garment components into converted garment component classes;

progressively designing apparel by displaying on said visual display means at least one converted fashion figure and superimposing at least one converted garment component selected from said data base on said converted fashion figure display;

outputting to said printout means a reproduction of said visual display means; and

outputting to said printout means a converted pattern, of each individual garment component of the pattern visually displayed by the visual display means retrieved from said data base and corresponding to each of said converted garment components visible on said visual display means whereby said garment components printout may be constructed into a representation of the appareil.

The components are retrievable on an ephemeral basis by giving commands in the form equivalent of pressing related keys on a keyboard in order to display various components of a desired composite design on the cathode ray tube display, it being possible to remove the display of a particular component when it is determined that it is not satisfactory, and substitute the display of another occurrence of the same component type until the design has been established to the satisfaction of the designer or user. At this point the design is permanently stored, given an identification number or identifying name and subsequently hard copy can be made and the designer or user provided with a permanent representation of the design. A series of such designs can also be produced by merely altering one or more of the components comprising the design, and further hard copy can also be made for purpose of comparison, or multiple designs may be compared together on the CRT screen. Preferably, as part of the printout, it is possible to print selected piece goods patterns, together with relative information pertinent to such piece goods, specifications relative to the pattern, construction and sizing as well. It will be apparent that designs can be made with a total absence of any manual sketching, or in the cases where the design is to partially consist of components which are not in the data base, supplemental sketching can be produced either before or after the printout is made, using the computer facility or by actually sketching onto the printout report.

The invention extends to a computer programmed to perform the above method.

In a preferred form the invention additionally provides the steps of inputting the desired size of the resultant converted patterns and scaling the output from the printout means to the desired size.

Preferably information concerning colour and fabric can be input to the data base and included in the printout and used to automatically modify the outputted pattern.

The invention will be more readily understood from the following description of a method and apparatus for carrying out the method given by way of example.

In the drawings, to which reference will be made in the specification, similar reference characters have been employed to designate corresponding parts throughout the several views.

Figure 1 is a schematic view of a fashion figure forming part of a completed design in accordance with the invention.

Figure 2 is a schematic view showing a plurality of possible skirt components, any of which may be selected as a part of a composite design.

Figure 3 is a similar schematic view showing a plurality of combination bodice and sleeve components, any of which may be selected as a component part of the same design.

Figure 4 is a schematic view showing the composite of Figure 1, and selections from Figures 2 and 3 in assembled condition, as may be viewed upon a cathode ray tube display.

Figure 5 is a corresponding schematic rear view.

Figure 6 is a schematic view showing a plurality of individual bodice components.

Figure 7 is a schematic view showing a plurality of individual collar components.

Figure 8 is a schematic view showing a plurality of individual sleeve components.

Figure 9 is a front elevational view of a blouse comprising an exemplary selected design.

Figure 10 is a front elevational view of a pattern of a front panel, comprising a component of the design shown in Figure 9.

Figure 11 is an elevational view of a pattern of a back panel.

Figure 12 is an elevational view of a sleeve element.

Figure 13 is an elevational view of a pattern of a first pocket.

Figure 13a is an elevational view of a pattern of a second pocket.

Figure 14 is an elevational view of a collar.

Figure 15 is an elevational view of a bound cuff.

Figure 16 is a schematic view showing minimum, although expandable, computer hardware required for implementing the disclosed method.

Figures 17 through 24, inclusive, and Figures 26 and 27 are schematic representations of program routines implementing the use of the hardware shown in Figure 16.

Figure 25 is a schematic representation of a screen layout forming part of a visual display.

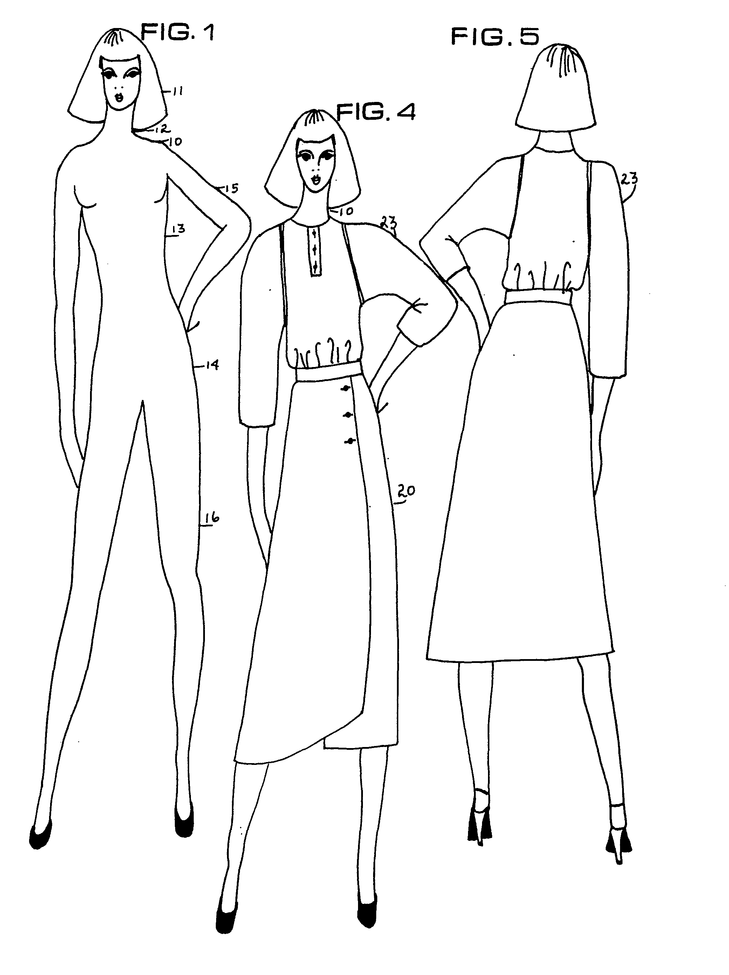

Referring to Figure 1 reference character 10 designates a sketch of a fashion figure of known type, including a head portion 11 and neck portion 12, an upper torso portion 13, a lower torso portion 14, arms 15, and legs 16.

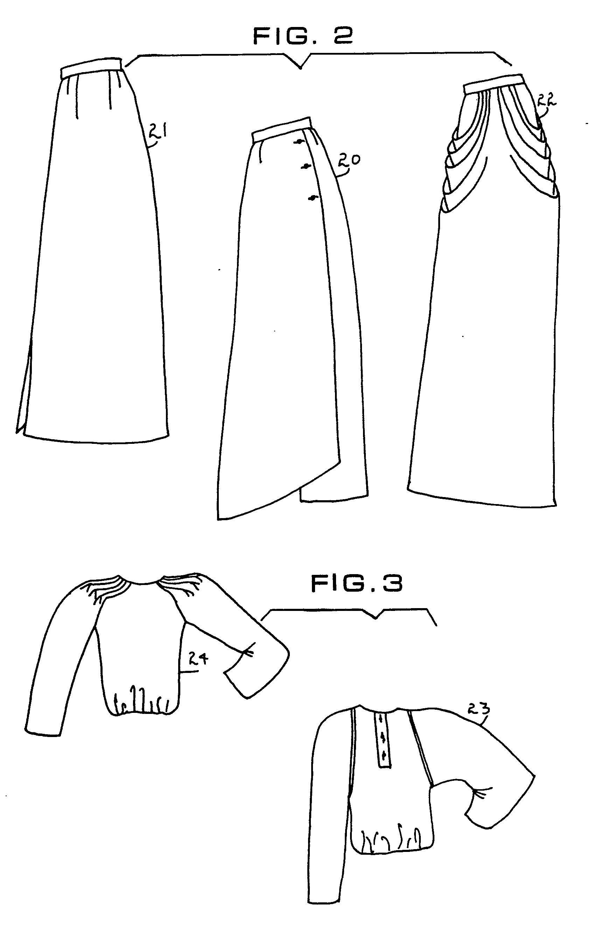

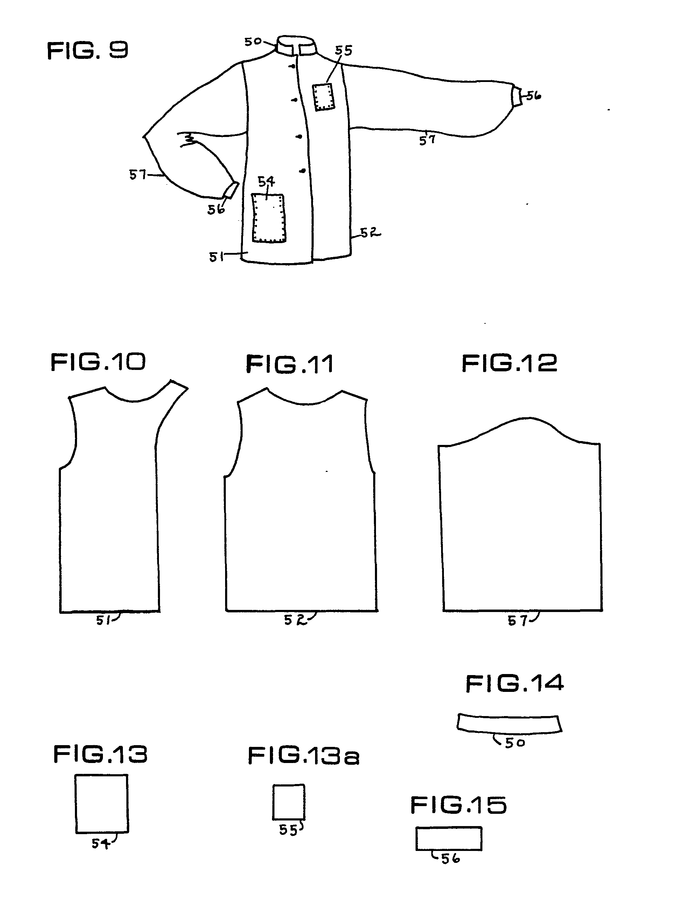

Figure 2 illustrates a plurality of skirt design portions 20, 21 and 22, which may in many cases be borrowed from a single page of a work book, and which are configured to match the fashion figure 10 shown in Figure 1. Figure 3 shows corresponding sleeve designs 23 and 24. It will be understood that other components exemplifying collars, belts, and the like, may also be prepared, and as many variations of each component are stored in a computer data base. Additional fashion figures (not shown) corresponding to the fashion figure 10, and showing other aspects of the figure, as for example, front, left and right sides, are also prepared and stored in the data base, there being corresponding displays of the design portions of each garment component as well.

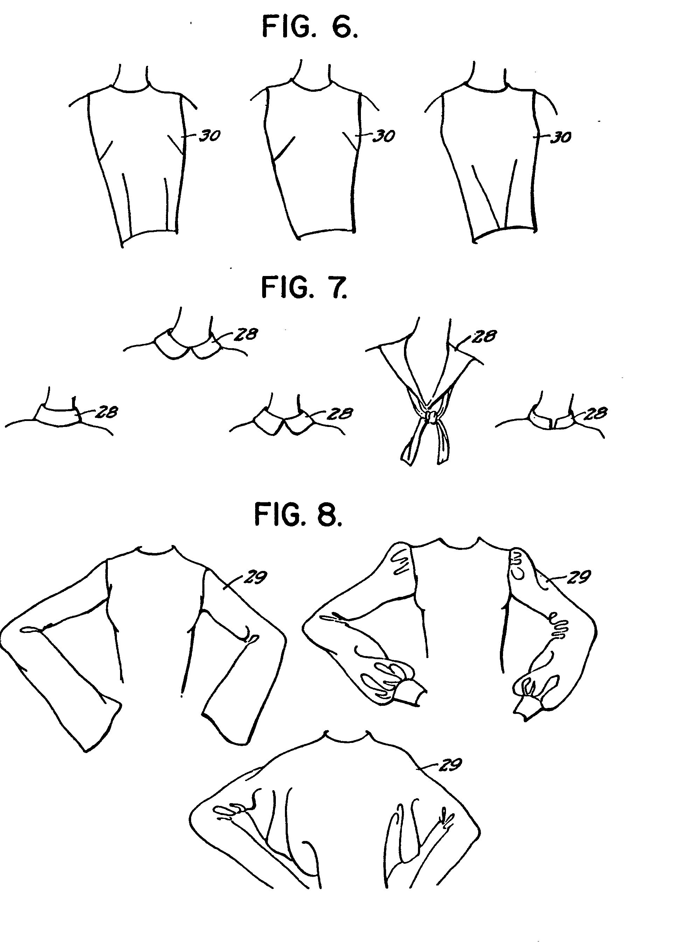

Figures 4 and 5 illustrate a composite display as might be seen on a cathode ray tube in which an individual component from each of Figures 2 and 3 is placed in superimposed relation upon the fashion figure 10. This superimposition is accomplished by merely pressing keys on a keyboard, or a combination of keys, or the equivalent, to provide an address to the desired component in storage, in standard indexed fashion, and the remaining parts of the component design are accomplished in a similar process.

When the completed design is displayed, the designer then has an opportunity to consider the design from the standpoint of possible improvement. Upon viewing the entire design, it may be deemed desirable to replace an individual component, such as a sleeve, and this is accomplished by cancelling the display of the sleeve component present on the cathode ray tube and substituting another sleeve component. The process may be continued as long as desired until total satisfaction has been obtained. At this point, the design is stored and can be transferred to printout means, and Figures 4 and 5 illustrate a typical representation, in which each component designated by using a different printout character, such as X's, Y's, A's, 0's, and the like, or when using the printer-plotter, by the use of different colour pens for plotting different components, alternate use of a CRT camera to photograph the image of the design off the CRT may also be performed.

It will be appreciated that the composition of the first of a series of designs may require a certain amount of research time on the part of the designer. However, succeeding similar designs, which may vary only in a single component, can be readily created by merely retaining the previous display during the printout function, and subsequently altering only the desired component, following which another printout may be made. Thus, since no manual sketching is required, after initial research, a skilled designer may create hundreds of possible designs during the course of a single session and have saved an enormity of redundant sketching and examination as well as time and physical energy at completion.

The designer, in an alternate approach, may use the data base to establish a given or fixed design while exploring in rapid fashion variations or combinations of variations to one or more components at a time. For example, the designer may select a bodice from the data base and have a repetitive display of that bodice with all of the different sleeves and/or all of the different collars, or a selection of bodice and skirt combinations may be made with a subsequent selection of any of the sleeves, collars and the like, and at the user's discretion, without displaying the fashion figure, or any of the other components, the presence of which might detract from consideration of the desired components.

From a desired printout or CRT photograph, it is, of course, possible to manually create corresponding patterns which may be duplicated in a variety of sizes for the purpose of fabricating selected designs.

As is known in the art, patterns are placed upon the fabric, and the fabric cut in accordance therewith, prior to sewing together to complete the garment. In accordance with a preferred feature of the present invention, these patterns are prepared and stored in the data base in a digitally reproducable manner so that they may be displayed upon the cathode ray tube by pressing appropriate keys, exactly as the components are displayed in draped form upon the fashion figure. Thus, upon the completion of a design and its subsequent printout, the corresponding components may also be displayed on the cathode ray tube, for checking, and obtained as a subsequent printout to form part of the complete file of a given design. When subsequently approved, the corresponding pattern sections are already present and need not be redrawn. The sample size pattern can be expanded or reduced by grading methods to any or all of a variety of sizes using computerized plotting means, known in the art, as exemplified by that disclosed in U.S. Patent No. 4,058,849, granted November 15, 1977 to William J. Fitzgerald.

When the selection of designs is finalized, the computer, by selection will print out all the corresponding pattern pieces of the components and parts of the garment needed to cut out piece goods and subsequently construct or fabricate the desired garment. Specifications relating to and regarding length of seams, widths of hems, dimension of collars, cuffs, pockets, and other details may also be requested and included. Following the completion of the design, each of the individual components 51—57 may be separately viewed on the cathode ray tube, and printed out on separate sheets for subsequent separation. Referring to Figures 9 through 15, inclusive, in the drawings Figure 9 illustrates an original composite design, designed, edited and finalized by the user, generally indicated by reference character 50 with corresponding pattern pieces Figures 10 through 15. This design can be constructed into a finished garment by assembling the pattern piece, first and second front panels 52 with a rear panel 53, application of pockets 54 and 55 thereon shown in Figure 9. A cuff 56 is sewn to each sleeve 57, thereon until garment is completed.

Description of hardware

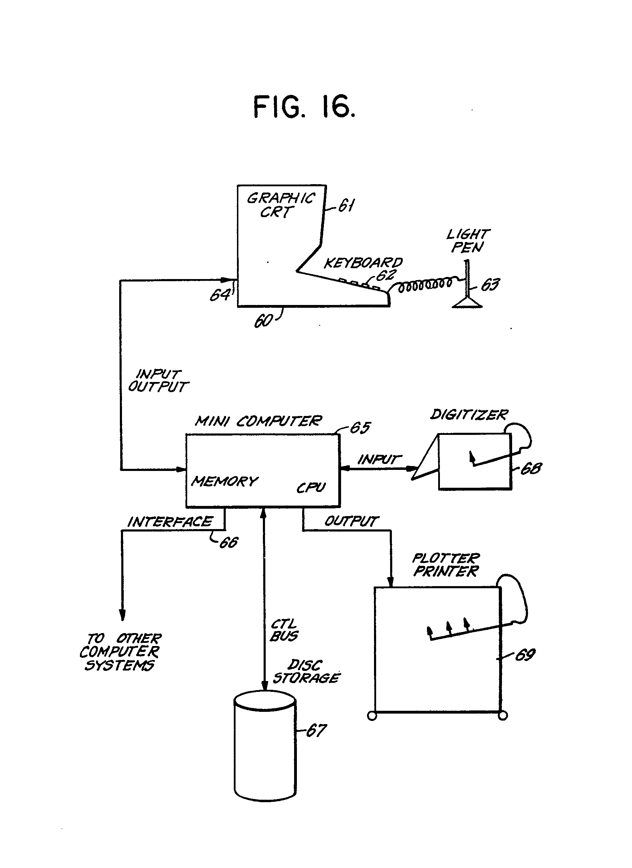

Referring to Figure 16 in the drawings, there is illustrated a simple access facility for implementing the disclosed method. This facility will include a console 60, at which the designer may be seated, the console including a graphic cathode ray tube 61, a keyboard 62, and a light pen 63 of known type. The keyboard 62 is interfaced at 64 with a mini computer 65, the computer in turn being interfaced at 66 for communication with other computer systems and to disk storage 67, a digitizer 68 and a plotter printer 69.

As all of the components 60—69 are readily commercially available, they need not be described in great detail. Suitable for digitizing terminals, for example, might be Model OPTEC 30, available from Autotrol Technology Corporation of 1250 North Washington Street, Denver, Colorado. Equally suitable is Series 800 available from California Computer Products of 2411 West La Palma Avenue, Anaheim, California. A suitable colour graphics cathode ray tube is available under Model AED/512, frm AED Incorporated of 440 Potrero Avenue, Sunnyvale, California, as is Model 374 available from Systems Research Laboratories of 2800 Indian Ripple Road, Dayton, Ohio. A suitable plotter printer is available under Model 106X from California Computer Products, above mentioned, and an equally suitable unit is available under Model 7220 from Hewlett Packard Corporation of 16399 West Bernardo Drive, San Diego, California.

Where desired, printout may be obtained through the use of CRT colour camera, as for example, Model 4000 available from Matrix Instruments of 230 Pegasus Avenue, Northvale, New Jersey. A wide variety of central processors (mini computers) is also available. Typical are Model HP 1000 available from Hewlett Packard, above mentioned, and Series I available from IBM Corporation. While most central processor units utilize disk storage of the specifications of the manufacturer, many microprocessor base systems have available a wide variety of disk units. In addition, practically all central processor units have a wide number of tape or telecommunications interfaces available for use, where the equipment will be installed in more than one location.

Description of software

Upon commencing operation, the user is presented with a menu, which by selecting one of the choices upon it, will cause the computer to execute that design function. The menu is displayed upon the CRT and offers the following choices:

1 START or CONTINUE a GARMENT DESIGN SESSION
2 PRINT OUT a COMPLETE GARMENT and COMPONENT LIST
3 PERUSE THRU the COMPONENT DATABASE
4 PERFORM a FABRIC ANALYSIS
5 COMPARE DESIGNED GARMENTS
6 PURGE UNWANTED DESIGNS or COMPONENTS from DATABASES
7 PRINT ANALYSIS STATISTICS
99 SHUT DOWN DESIGNER SYSTEM

Function 2 activates the printer plotter unit, and causes a user entered named garment design to be printed out along with the component's identifying numbers (which were selected by the designer).

Function 3 allows the user to examine "images" of previously stored components in order to find one, enter a new one, or modify any existing one. While examination is done by visual method, all data is stored or modified with "data records" stored on disk.

Function 4 causes display or print of a fabric analysis report from data derived from a design previously selected by the designer (using function 1 which will be described later).

Function 5 causes the comparative display of print of multiple garments which were designed by the designer using function 1.

Function 6 allows any garment which was designed or any component entered or modified during perusal (function 3) to be deleted (eliminated) from the system. It also makes the space previously occupied by the item purged available for any system use.

Function 7 prints the statistics for a particular garment which had been designed previously in function 1.

Design functions

Function 1 will cause a human figure outline to be displayed upon the screen of the graphic CRT. Next, the user will be prompted for entry of a "yes" or "no" response to the question: "Should I first continue from a previously designed garment?". If the response is "yes", the system will first superimpose the previously designed garment (after getting its name from the user) upon the model human figure on the CRT screen, then will proceed to the next step. Next, the following sub-menu of choices will appear below the figure on the screen:

1 Add/replace component
2 Colour or Fabric Pattern Component
3 Alter Component
4 Overlay Alternate Component
5 Remove Component
6 Save Garment
99 Exit Session

Choice 1 will allow a component identification to be entered. The system will automatically position the component at the right point on the model figure. If a component has already been placed at that point, it will be replaced and forgotten. Choice 2 will allow a colour or fabric pattern from two hundred fifty six choices to be filled into a component. If a colour was already there, it too will be replaced and forgotten.

Choice 3 will allow a component to be slightly modified in place on the model as far as its positioning, seaming, and relative size. Modifications will only be saved with the garment being designed, unless a special command instructs the system to remember them as a "new garment component".

Choice 4 will allow either the actual double superimposition of a second component over a first or will allow a rapid switching back and forth between multiple choices of individual components of a single type (i.e. sleeves or legs, but not both at the same time).

Choice 5 will simply remove a component from the displayed garment design. A recall function command will allow the last removed component from any location on the model figure to be repositioned upon the screen.

Choice 6 will allow either the simple saving of a garment design for future modification or printing out, or it will allow a temporary copy of a design to be held in a waiting area and displayed to the right of the working copy.

Depending upon the model of the design system, a variable number of temporary copies will be able to be displayed along with the working copy, and any of them saved as a finished design.

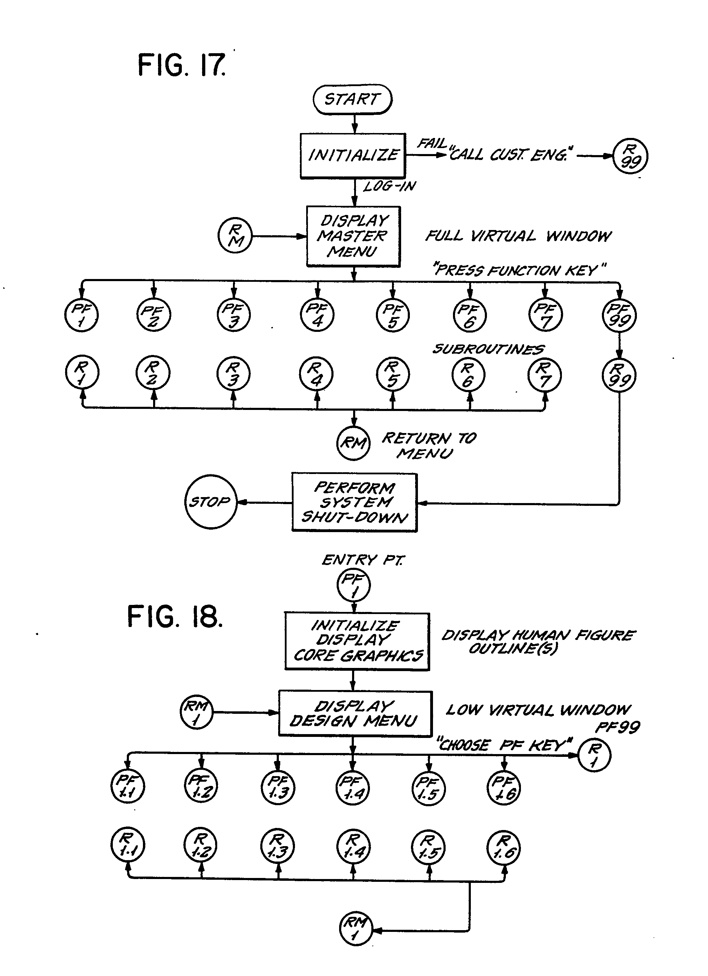

Referring to Figure 17 in the drawing, there is illustrated a program corresponding to system function 1 whereupon commencement of operation, the display master menu is retrieved from memory to display the available functions, which are in turn initiated by pressing the proper press function key which transfers through the associated connector Pfn to the associated subroutine as described above. At the completion of each function, the flow of the programmed subroutine passes to the connector designated "R" followed by the number of the function resulting in a return to the display of the master menu. As many functions as desired may be successively employed, following which the key designated "pf 99" is pressed to discontinue the operation of the system.

Figure 18 illustrates a subroutine followed immediately after initiation of operation, showing the display of a human figure prior to the placing of garment components, with a separate display of the second level design menu, and subfunction selection logic.

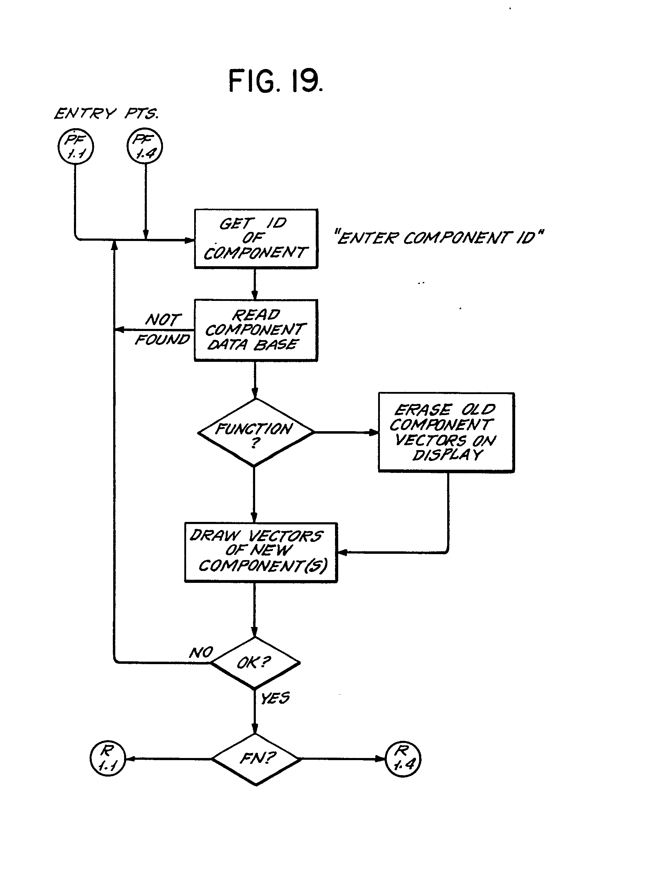

Figure 19 illustrates a subroutine employed during system function No. 3, that is the perusing through the component data base in serial fashion.

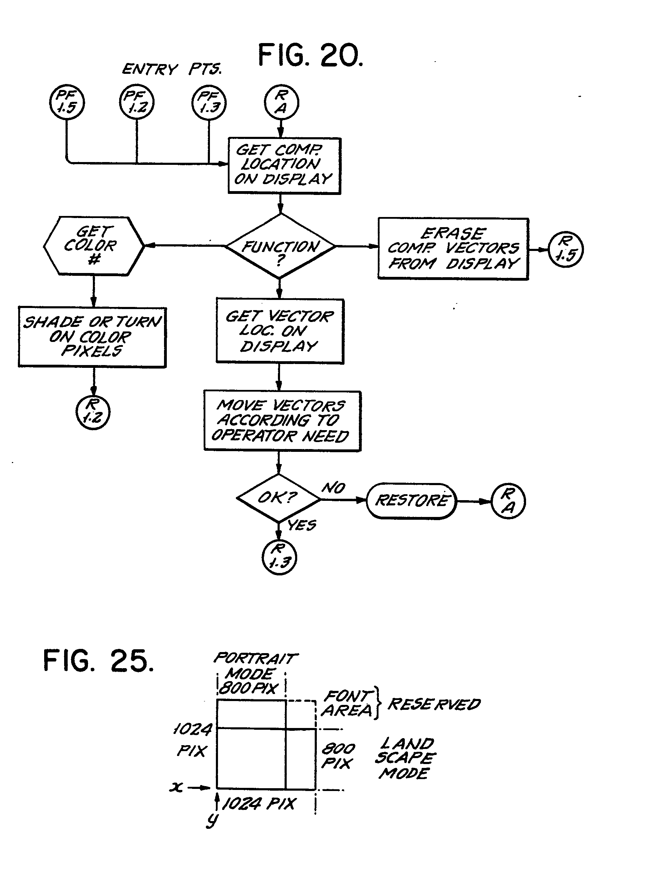

Figure 20 illustrates a subroutine employed during system functions 2, 3, and 5, in the process of designating the garment, culminating in selection of fabric or colour, a perusal through the component data base, a comparison of the design garments (function 5), and an ultimate printout (function 2).

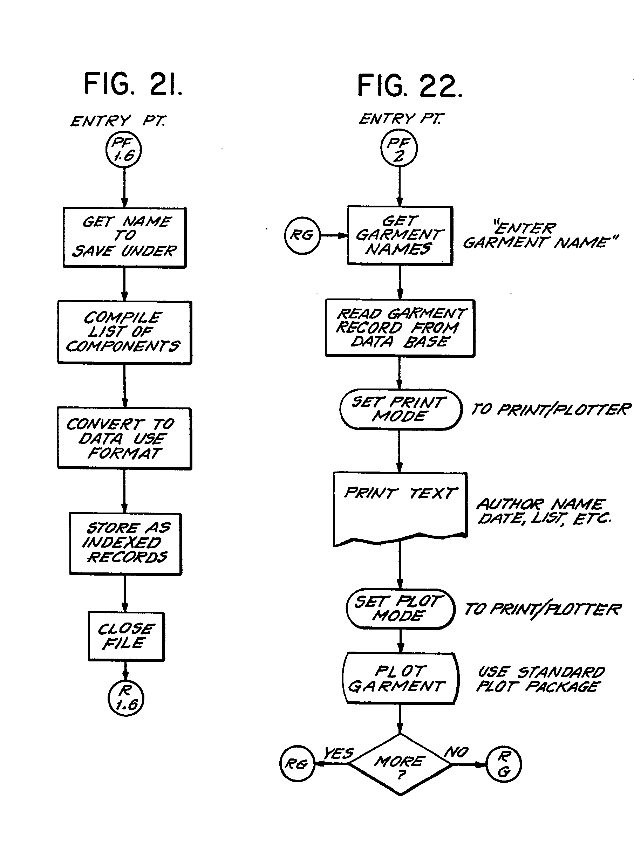

Figure 21 illustrates the program followed during the entry of data for a completed design which is placed in storage for subsequent retrieval (function 6). In this function, unwanted designs or components are retrieved from the data bases to afford more storage space, and ultimately stored as indexed records.

Figure 22 illustrates the program for printing and plotting (function 2).

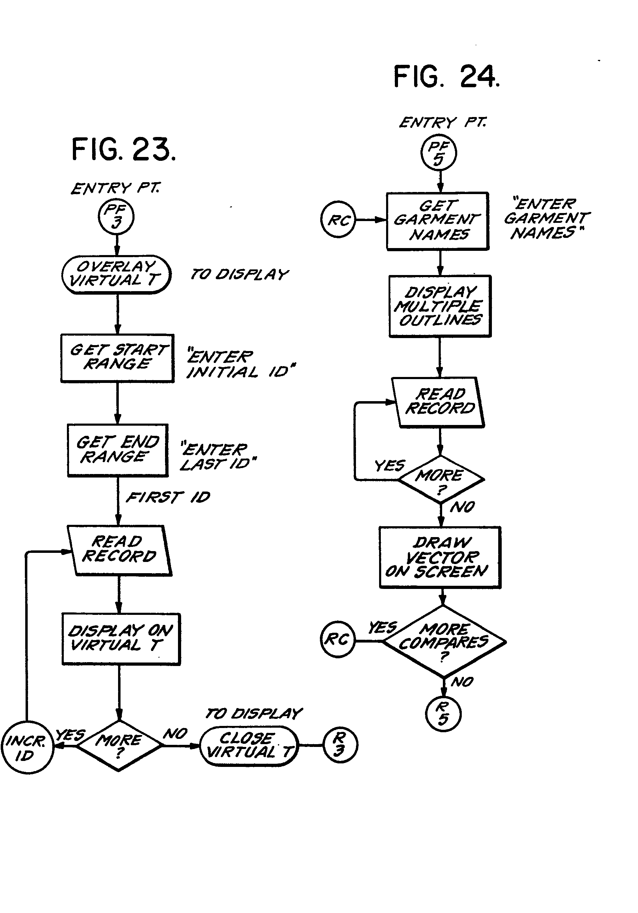

Figure 23 illustrates the program for function 3, perusal through the component data base, without more.

Figure 24 illustrates the program for function 5, a comparative display subsystem, in which multiple outlines are displayed seriatim for final selection.

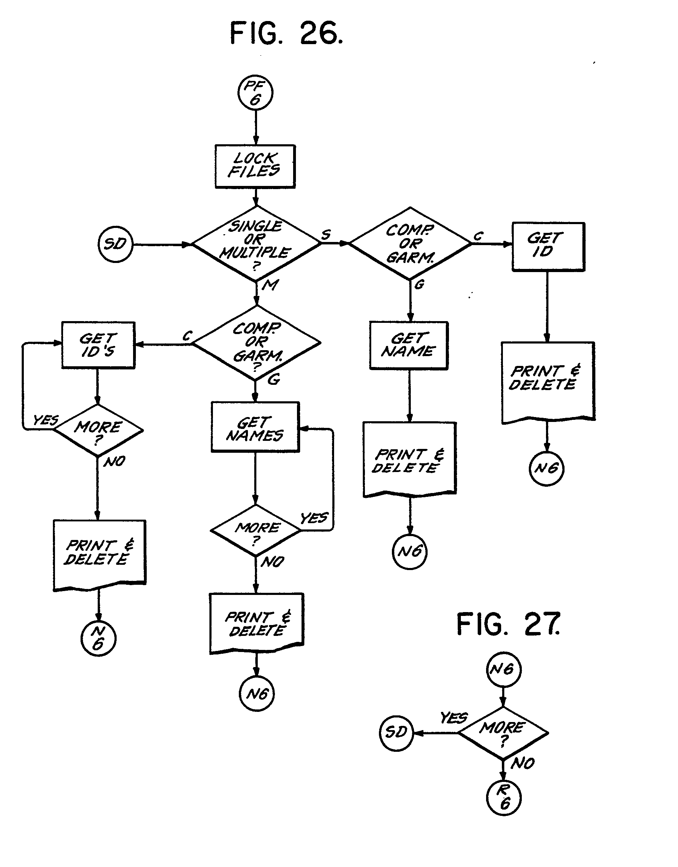

Figure 25 illustrates a typical screen layout on the cathode ray tube, wherein an upper portion of the tube may be reserved for message display, and a lower portion of the tube reserved for vector display.

Figure 26 illustrates a program for closing out of the data base certain information printed and stored in a library.

Figure 27 is an adjunct program which may be appended to the lower left hand portion of Figure 26.

Reference is made to Figures 17 through 25, as an example of one function of the program, illustrated is the flow through the flowchart "Save Garment". Beginning from start of Figure 17, the program passes to initially allow the operator to log in and display the master menu. Since "Save Garment" is a garment design editing function, the operator presses PF key 1 to enlist garment edit function.

The program passes to a connector which leads to an entry point pf1 on Figure 18. The garment edit subsystem takes control in calling the graphic display logic and displays the fashion figure outline. A small menu of garment designs functions is placed below the fashion figure outline and the operator is prompted to choose a PF key.

Since "Save Garment" is required in the save garment return, the operator presses pf6 which transfers the control to off page connector pf1.6 which in turn passes control to entry point table pf1.6 on Figure 21. NOTE: normally this function would only be selected after a design would be completely displayed on the fashion figure outline.

Enter point 1.6 first causes the system to prompt the operator for a name or ID (identification) to save the design under or to file the newly created design from the selected components. Then it (the system) composites a list of components selected from the design on the screen out of the temporary memory. The system converts these to a numerical, rather than a graphic, list of component ID (which points back to component images) and stores them as standard index records along with other discretely associated information such as another name, date or other analogues data. A system level catalog file operation is performed to ensure the integrity of the data base.

Control passes to return to a connector passing back to a reentry point labelled R1.6 on Figure 18. This passes control to a connector labelled RM"1" which causes the redisplay of the desired menu below the fashion figure outline. At this point the operator may terminate the desired function by pressing pf99 which passes control to R1 on Figure 17. This in turn passes to connector RM which redisplays another menu of functions on the screen.

At this point the system may be terminated by Pf99 which is a sudo connector passing control to connector RM99 which executes logic to perform a system shutdown. At this point execution stops.

It may thus be seen that I have invented a novel and highly useful improved method for creating apparel designs, and for facilitating the initial stages of production, by means of which resort is made to existing computer technology to materially simplify and expedite the preparation of a plurality of graphic representations of apparel designs from which selections can be made. To maintain the cost of necessary equipment at a reasonably low level, it is necessary only that sketches be prepared by the designers and submitted to a processing center having facilities for preparing and storing the data base. The designer may be employed at an establishment having computer terminal provisions, a cathode ray tube display and printout means.

## Claims

1. A method for computer aided design of apparel, comprising the steps of:

providing computer means (60) including visual display means (61) data input means (62) and printout means (69) for generating a permanent record of computer output;

designing at least one fashion figure (10) on which said apparel design may be selectively and compositely superimposed;

designing a plurality of garment components (20, 23);

providing a plurality of planar patterns, each of said patterns corresponding to one of each of said garment components;

converting each of said fashion figures, said garment components and said patterns into a form which may be stored, manipulated and output by said computer means;

creating a data base (67) accessible by said computer means (60) containing said converted fashion figures (10), converted garment components (20, 23), and converted patterns, said data base (67) linking said converted patterns (10) to said corresponding converted garment components (67), said data base further linking similar converted garment components into converted garment component classes;

progressively designing apparel by displaying on said visual display means at least one converted fashion figure (10) and superimposing at least one converted garment component (20, 23) selected from said data base (67) on said converted fashion figure (10) display;

outputting to said printout means (69) a reproduction of said visual display means (61); and

outputting to said printout means (69) a converted pattern, of each individual garment component of the pattern visually displayed by the visual display means retrieved from said data base (67) and corresponding to each of said converted garment components visible on said visual display means whereby said garment components printout may be constructed into a representation of the apparel.

2. The method for computer aided design of apparel, as claimed in Claim 1, further characterised by the steps of inputting to said computer means (60) through said data input means (62) the desired size of the resultant converted patterns, and scaling the output from said printout means of said at least one converted pattern to the size input.

3. The method for computer aided design of apparel, as claimed in Claim 1 or Claim 2 characterised by the additional steps of expanding said data base (67) to include fabric data and colour data, choosing a fabric and colour to correspond to each converted garment component and outputting to said printout means (69) fabric data and colour data corresponding to each output converted pattern.

4. The method for computer aided design of apparel, as claimed in Claim 3, characterised in that said fabric data is used to modify said output converted pattern.

5. Apparatus for aiding the design of apparel, comprising

computer means (60) including visual display means (61) data input means (62) and data storage means (67)

the computer means being programmed for designing at least one fashion figure (10) on which said apparel design may be selectively and compositely superimposed;

designing a plurality of garment components (20, 23);

providing a plurality of planar patterns, each of said patterns corresponding to one of each of said garment components;

converting each of said fashion figures, said garment components and said patterns into a form which may be stored, manipulated and output by said computer means;

creating a data base (67) accessible by said computer means (60) containing said converted fashion figures (10), converted garment components (20, 23), and converted patterns, said data base (67) linking said converted patterns (10) to said corresponding converted garment components (67), said data base further linking similar converted garment components into converted garment component classes;

progressively designing apparel by displaying on said visual display means at least one converted fashion figure (10) and superimposing at least one converted garment component (20, 23) selected from said data base (67) on said converted fashion figure (10) display;

characterised by printout means (69) connected to said computer means, and in that the computer means is programmed for

outputting to said printout means (69) a reproduction of said visual display means (61); and

outputting to said printout means (69) a converted pattern, of each individual garment component of the pattern visually displayed by the visual display means retrieved from said data base (67) and corresponding to each of said converted garment components visible on said visual display means whereby said garment components printout will be constructed into a representation of the apparel.

6. Apparatus for computer aided design of apparel, as claimed in Claim 5, characterised by means programmed to input to said computer means (60) through said data input means (62) the desired size of the resultant converted patterns, and to scale the output from said printout means of said at least one converted pattern to said inputted size.

7. Apparatus for computer aided design of apparel, as claimed in Claim 1 or Claim 2 characterised in that the computer means is additionally supplied with information including fabric data and colour data, and is programmed for selecting a fabric and colour to correspond to each converted garment component and outputting to said printout means (69) fabric data and colour data corresponding to each output converted pattern.

8. Apparatus for computer aided design of apparel, as claimed in Claim 3, characterised in that the computer means is programmed to use said fabric data to modify said output converted pattern.

**Patentansprüche**

1. Verfahren zum rechnergestützten Entwurf von Kleidung, das folgende Schritte beinhaltet:

Bereitstellung eines Rechners (60), dem eine visuelle Anzeige (61), Dateneingabeeinrichtung (62) und Druckhilfsmittel (69) zur fortwährenden Aufzeichnung der Rechnerausgabe angeschlossen sind;

Skizzieren mindestens einer Musterpuppe (10), der der Kleidungsentwurf mit Einzelteilen und insgesamt überlagert werden kann;

Skizzieren einer Vielzahl von Bekleidungskomponenten (20, 23);

Bereitstellung einer Vielzahl von ebenen Schnittmustern, von denen jedes einer Bekleidungskomponente entspricht;

Konvertierung der Musterpuppen, Bekleidungskomponenten und Schnittmuster in eine vom genannten Rechner speicherbare, manipulierbare und ausgebbare Form;

Erstellung einer Datenbank (67), auf die der Rechner (60) zugreifen kann und die die konvertierten Musterpuppen (10), Bekleidungskomponenten (20, 23) und Schnittmuster enthält, die die konvertierten Schnittmuster (10) mit den entsprechenden konvertierten Bekleidungskomponenten (67) verbindet und die außerdem ähnliche konvertierte Bekleidungskomponenten in konvertierten Bekleidungskomponentenklassen zusammenfaßt;

schrittweise Entwurf von Kleidung durch Wiedergabe mindestens einer konvertierten Mustergruppe (10) auf genannter visueller Anzeige und Überlagerung mindestens einer, aus der Datenbank (67) ausgewählten, konvertierten Bekleidungskomponente (20, 23) über dieselbe;

Ausgabe einer Reproduktion der visuellen Anzeige (61) über eine Druckeinrichtung (69); und

Ausgabe über die Druckeinrichtungen (69), eines konverierten Schnittmusters jeder einzelnen Bekleidungskomponente des Musters, die auf der visuellen Anzeige gezeigt werden, die aus der besagten Datenbank (67) stammen und die den auf der visuellen Anzeige sichtbaren, Bekleidungskomponenten entsprechen, wodurch der genannte Bekleidungskomponentenausdruck in eine Repräsentation der Kleidung eingefügt werden kann.

2. Verfahren zum rechnergestützten Entwurf von Kleidung nach Anspruch 1, gekennzeichnet durch die Eingabe der gewünschten Größe, der sich ergebenden konvertierten Muster an den Rechner (60) mittels der Dateneingabeeinrichtungen (62) und Skalierung der Ausgabe durch die Druckeinrichtungen des wenigstens einen konvertierten Musters entsprechend der Größeneingabe.

3. Verfahren zum rechnergestützten Entwurf von Kleidung nach Anspruch 1 oder 2, gekennzeichnet durch die zusätzlichen Schritte der Erweiterung der Datenbank (67) um Gewebe- und Farbdaten einzufügen, der Wahl eines Gewebes und einer Farbe, entsprechend zu jeder konvertierten Bekleidungskomponente, und der Ausgabe der, jedem ausgegebenen, konvertierten Schnittmuster entsprechenden Gewebe- und Farbdaten über die genannten Drucheinrichtungen (69).

4. Verfahren zum rechnergestützten Entwurf von Kleidung nach Anspruch 3, dadurch gekennzeichnet, daß besagte Gewebedaten zur Modifikation der besagten ausgegebenen, konvertierten Muster benutzt werden.

5. Vorrichtung zur Unterstützung des Entwurfs von Kleidung,

mit einem Rechner (60), einschließlich visueller Anzeige (61), Dateneingabeeinrichtungen (62) und Datenspeichermitteln (67),

wobei der Rechner zum Skizzieren mindestens einer Musterpuppe programmiert ist, welcher der Kleidungsentwurf mit Einzelteilen und insgesamt überlagert werden kann,

wobei eine Vielzahl von Bekleidungskomponenten (20, 23) skizziert wird,

wobei eine Vielzahl ebener Musterteile, von denen jedes mit einer der Bekleidungskomponenten korrespondiert, bereitgestellt wird,

wobei jede der Musterpuppen Bekleidungskomponenten und Muster in eine vom Rechner speicherbare, manipulierbare und ausgebbare Form konvertiert wird,

wobei eine Datenbank (67), auf die durch den Rechner (60) zugegriffen werden kann und die die konvertierten Modellpuppen, Bedleidungskomponenten (20, 23) und Muster (10) enthält, erstellt wird und die Datenbank (67) die konvertierten Muster (10) mit den Bekleidungskomponenten (67) sowie ähnlich konvertierte Bekleidungskomponenten mit konvertierten Bekleidungskomponentenklassen verbindet;

wobei weiterhin Kleidung durch Wiedergabe mindestens einer konvertierten Musterpuppe (10) auf besagter visueller Anzeigeeinrichtung und Überlagerung mindestens einer konvertierten, aus der Datenbank ausgewählten Bekleidungskomponente (20, 23) über die dargestellte Modellpuppe (10) schrittweise entworfen wird;

gekennzeichnet durch Druckeinrichtungen, die mit dem Rechner verbunden sind, der so programmiert ist, daß er die Ausgabe einer Reproduktion der visuellen Darstellung (61) über den Drucker (69) und eines konvertierten Schnittmusters jeder einzelnen Bekleidungskomponente des Musters, das auf der visuellen Anzeige gezeigt wird, das aus der besagten Datenbank (67) stammt, und das jeder der genannten, auf der visuellen Anzeige sichtbaren Bekleidungskomponenten entspricht, wodurch der genannte Beklei-
dungskomponentenausdruck in eine Repräsenta-
tion der Kleidung eingefügt werden kann.

6. Vorrichtung zum rechnergestützten Entwurf
von Kleidung nach Anspruch 5, gekennzeichnet
durch Hilfsmittel, die erlauben, dem besagten
Rechner (60) über die Dateneingabeeinrichtungen
(62) die gewünschte Größe der resultierenden
konvertierten Muster einzugeben und die Druckerausgabe mindestens eines konvertierten Musters
auf die eingegebene Größe zu skalieren.

7. Vorrichtung zum rechnergestützten Entwurf
von Kleidung nach den Ansprüchen 1 oder 2,
dadurch gekennzeichnet, daß der Rechner zusätzlich mit Informationen über Gewebe- und Farbdaten versorgt wird, und so programmiert ist, daß er
zu jeder konvertierten Bekleidungskomponente
ein korrespondierendes Gewebe und eine Farbe
aussucht und diese Daten über die besagten
Druckhilfsmittel (69) ausgibt.

8. Vorrichtung zum rechnergestützten Entwurf
von Kleidung nach Anspruch 3, dadurch gekennzeichnet, daß der Rechner so programmiert ist,
daß er die Gewebedaten benutzt, um die ausgegebenen konvertierten Muster zu modifizieren.

**Revendications**

1. Procédé pour dessiner des vêtements avec
l'assistance d'un ordinateur comprenant les
étapes suivantes:

On utilise des moyens à ordinateur (60) comprenant des moyens d'affichage visuel (61), des
moyens d'éntrée des données (62) et des moyens
d'impression (69) pour engendrer un enregistrement permanent de la sortie de l'ordinateur;

On dessine au moins un mannequin (10) auquel
ledit vêtement peut être superposé de manière
sélective et combinée;

On dessine une pluralité de composants de
vêtement (20, 23);

On fournit une pluralité de patrons plans, chacun desdits patrons correspondant à l'un desdits
composants de vêtement;

On convertit chacun desdits mannequins, desdits composants de vêtement et desdits patrons et
une forme qui peut être mise en mémoire, manipulée et éditée par lesdits moyens à ordinateur;

On crée une base de données (67) accessible par
lesdits moyens à ordinateur (60) et contenant
lesdits mannequins convertis (10), lesdits composants de vêtement convertis (20, 23) et lesdits
patrons convertis, ladite base de données (67)
rattachant lesdits patrons convertis auxdits composants de vêtement convertis qui leur correspondent, et ladite base de données rattachant en outre
des composants de vêtement similaires pour
former des classes de composants de vêtement
convertis;

On dessine progressivement le vêtement en
affichant sur lesdits moyens d'affichage visuel au
moins un mannequin converti (10) et en superposant audit affichage du mannequin converti (10) au
moins un composant de vêtement converti (20, 23)
chois dans ladite base de données (67);

On édite sur lesdits moyens d'impression (69)
une reproduction desdits moysns d'affichage
visuel (61); et;

On édite sur lesdits moyens d'impression (69)
un partron converti de chaque composant de
vêtement individuel du patron visuellement
affiché par lesdits moyens d'affichage visuel,
retrouvé par ladite base de données (67) et correspondant à chacun desdits composants de vêtement convertis visibles sur lesdits moyens d'affichage visuel, ladite édition des composants de
vêtement pouvant être construite en une représentation du vêtement.

2. Procédé pour dessiner des vêtements avec
l'assistance d'un ordinateur selon la revendication
1, caractérisé en outre par les étapes consistant à
introduire dans lesdits moyens à ordinateur (60)
par lesdits moyens d'entrée des données (62) la
taille que l'on désire pour les patrons convertis
résultants, et, en fonction de la taille introduite, à
mettre à l'échelle la sortie desdits moyens d'impression d'au moins un patron converti.

3. Procédé pour dessiner des vêtements avec
l'assistance d'un ordinateur selon la revendication
1 ou la revendication 2, caractérisé par les étapes
additionnelles consistant à étendre ladite base de
données (67) pour y inclure des données de tissus
et des données de couleurs, à choisir un tissu et
une couleur correspondant à chaque composant
de vêtement converti, et à éditer sur lesdits
moyens d'impression (69) des données de tissus
et des données de couleurs correspondant à
chaque patron converti qui est édité.

4. Procédé pour dessiner des vêtements avec
l'assistance d'un ordinateur selon la revendication
3, caractérisé par le fait que lesdites données de
tissus sont utilisées pour modifier ledit patron qui
est édité.

5. Appareil pour aider au dessin de vêtements
comprenant:

Des moyens à ordinateur (60) comprenant des
moyens d'affichage visuel (61), des moyens d'entrée des données (62) et des moyens d'enregistrement des donnéss (67),

Les moyens à ordinateur étant programmés
pour dessiner au moins un mannequin (10) auquel
ledit vêtement peut être superposé de manière
sélective et combinée;

On dessine une pluralité de composants de
vêtement (20, 23);

On fournit une pluralité de patrons plans, chacun desdits patrons correspondant à l'un desdits
composants de vêtement;

On convertit chacun desdits mannequins, desdits composants de vêtement et desdits patrons en
une forme qui peut être mise en mémoire, manipulée et éditée par lesdits moyens à ordinateur;

On crée une base de données (67) accessible par
lesdits moyens à ordinateur (60) et contenant
lesdits mannequins convertis (10), lesdits composants de vêtement convertis (20, 23) et lesdits
patrons convertis, ladite base de données (67)
rattachant lesdits patrons convertis auxdits composants de vêtement convertis qui leur correspondent, et ladite base de données rattachant en outre des composants de vêtement similaires pour former des classes de composants de vêtement convertis;

On dessine progressivement le vêtement en affichant sur lesdits moyens d'affichage visuel au moins un mannequin converti (10) et en superposant audit affichage du mannequin converti (10) au moins un composant de vêtement converti (20, 23) choisi dans ladite base de données (67);

Caractérisé par des moyens d'impression (69) reliés auxdits moyens à ordinateur, et par le fait que les moyens à ordinateur sont programmés pour:

Editer sur lesdits moyens d'impression (69) une reproduction desdits moyens d'affichage visuel (61); et;

Editer sur lesdits moyens d'impression (69) un patron converti de chaque composant de vêtement individuel du patron visuellement affiché par lesdits moyens d'affichage visuel, retrouvé par ladite base de données (67) et correspondant à chacun desdits composants de vêtement convertis visibles sur lesdits moyens d'affichage visuel, ladite édition des composants de vêtement pouvant être construite en une représentation du vêtement.

6. Appareil pour dessiner des vêtements avec l'assistance d'un ordinateur selon la revendication 5, caractérisé par des moyens programmés pour introduire dans lesdits moyens à ordinateur (60) par lesdits moyens d'entrée des données (62) la taille que l'on désire pour les patrons convertis résultants, et, en fonction de la taille introduite, pour mettre à l'échelle la sortie desdits moyens d'impression d'au moins un patron converti.

7. Appareil pour dessiner des vêtements avec l'assistance d'un ordinateur selon la revendication 5 ou la revendication 6, caractérisé par le fait que l'on fournit en outre aux moyens à ordinateur des informations comprenant des données de tissus et des données de couleurs, et que ceux-ci sont programmés pour choisir un tissu et une couleur correspondant à chaque composant de vêtement converti, et pour éditer sur lesdits moyens d'impression (69) des données de tissus et des données de couleurs correspondant à chaque patron converti qui est édité.

8. Appareil pour dessiner des vêtements avec l'assistance d'un ordinateur selon la revendication 7, caractérisé par le fait que lesdits moyens à ordinateur sont programmés pour utiliser lesdites données de tissus pour modifier ledit patron converti qui est édité.

FIG. 1

FIG. 4

FIG. 5

FIG. 2

21

20

22

FIG. 3

24

23

# FIG. 6.

*30* *30* *30*

# FIG. 7.

*28* *28*

*28* *28* *28* *28*

# FIG. 8.

*29* *29*

*29*

FIG. 9

FIG.10

FIG.11

FIG.12

FIG.14

FIG.13

FIG.13a

FIG.15

4

# FIG. 16.

GRAPHIC CRT *61*

LIGHT PEN

KEYBOARD *62*

*63*

*64*

*60*

INPUT OUTPUT

MINI COMPUTER *65*

DIGITIZER

INPUT

*68*

MEMORY          CPU

INTERFACE

*66*

OUTPUT

PLOTTER PRINTER

TO OTHER COMPUTER SYSTEMS

CTL BUS

DISC STORAGE

*69*

*67*

## FIG. 17.

START

INITIALIZE → *FAIL* "CALL CUST. ENG." → (R 99)

*LOG-IN*

(R M) → DISPLAY MASTER MENU    *FULL VIRTUAL WINDOW*

"PRESS FUNCTION KEY"

(PF 1)  (PF 2)  (PF 3)  (PF 4)  (PF 5)  (PF 6)  (PF 7)  (PF 99)

*SUBROUTINES*

(R 1)  (R 2)  (R 3)  (R 4)  (R 5)  (R 6)  (R 7)  (R 99)

(RM)  *RETURN TO MENU*

STOP ← PERFORM SYSTEM SHUT-DOWN

*ENTRY PT.*

(PF 1)

## FIG. 18.

INITIALIZE DISPLAY CORE GRAPHICS    *DISPLAY HUMAN FIGURE OUTLINE(S)*

(RM 1) → DISPLAY DESIGN MENU    *LOW VIRTUAL WINDOW*    *PF99*

"CHOOSE PF KEY"  (R 1)

(PF 1.1)  (PF 1.2)  (PF 1.3)  (PF 1.4)  (PF 1.5)  (PF 1.6)

(R 1.1)  (R 1.2)  (R 1.3)  (R 1.4)  (R 1.5)  (R 1.6)

(RM 1)

# FIG. 19.

# FIG. 20.

ENTRY PTS.

$\left(\begin{array}{c}PF\\1.5\end{array}\right)$   $\left(\begin{array}{c}PF\\1.2\end{array}\right)$   $\left(\begin{array}{c}PF\\1.3\end{array}\right)$   $\left(\begin{array}{c}R\\A\end{array}\right)$

GET COMP.
LOCATION
ON DISPLAY

GET
COLOR
#   ←   FUNCTION
?   →   ERASE
COMP. VECTORS
FROM DISPLAY   $\left(\begin{array}{c}R\\1.5\end{array}\right)$

SHADE OR TURN
ON COLOR
PIXELS

$\left(\begin{array}{c}R\\1.2\end{array}\right)$

GET VECTOR
LOC. ON
DISPLAY

MOVE VECTORS
ACCORDING TO
OPERATOR NEED

OK?   NO   RESTORE   $\left(\begin{array}{c}R\\A\end{array}\right)$

YES

$\left(\begin{array}{c}R\\1.3\end{array}\right)$

# FIG. 25.

PORTRAIT
MODE
800 PIX

FONT
AREA } RESERVED

1024
PIX

800
PIX

LAND
SCAPE
MODE

x →

1024 PIX

y

8

# FIG. 21.

ENTRY PT.

(PF 1.6)

GET NAME
TO
SAVE UNDER

COMPILE
LIST OF
COMPONENTS

CONVERT TO
DATA USE
FORMAT

STORE AS
INDEXED
RECORDS

CLOSE
FILE

(R 1.6)

# FIG. 22.

ENTRY PT.

(PF 2)

(RG) → GET
GARMENT
NAMES          "ENTER
               GARMENT NAME"

READ GARMENT
RECORD FROM
DATA BASE

SET PRINT
MODE          TO PRINT/PLOTTER

PRINT TEXT    AUTHOR NAME,
              DATE, LIST, ETC.

SET PLOT
MODE          TO PRINT/PLOTTER

PLOT          USE STANDARD
GARMENT       PLOT PACKAGE

(RG) ← YES — MORE ? — NO → (R G)

# FIG. 24.

ENTRY PT.

(PF 5)

(RC) → GET GARMENT NAMES   "ENTER GARMENT NAMES"

DISPLAY MULTIPLE OUTLINES

READ RECORD

MORE ? — YES

NO

DRAW VECTOR ON SCREEN

(RC) ← YES — MORE COMPARES ?

NO

(R 5)

# FIG. 23.

ENTRY PT.

(PF 3)

OVERLAY VIRTUAL T   TO DISPLAY

GET START RANGE   "ENTER INITIAL ID"

GET END RANGE   "ENTER LAST ID"

FIRST ID

READ RECORD

DISPLAY ON VIRTUAL T

(INCR. ID) ← YES — MORE ? — NO → CLOSE VIRTUAL T → (R 3)

TO DISPLAY

# FIG. 26.

# FIG. 27.